# EUROPÄISCHE PATENTSCHRIFT

(11) **EP 1 491 497 B1**
(45) Veröffentlichungstag und Bekanntmachung des Hinweises auf die Patenterteilung: **15.11.2006**
(21) Anmeldenummer: 04014841.3
(22) Anmeldetag: 24.06.2004
(51) Int. Cl.: C01B 31/04

(54) **Verfahren zur Herstellung von expandiertem Graphit**
Process for preparing expanded graphite
Procédé de fabrication de graphite expansé

(30) Priorität: 24.06.2003 DE 10328342
(43) Veröffentlichungstag der Anmeldung: 29.12.2004
(73) Patentinhaber: Graphit Kropfmühl AG, 94051 Hauzenberg (DE)
(72) Erfinder: Handl, Werner, 90518 Altdorf (DE)
(74) Vertreter: Behnisch, Werner

(56) Entgegenhaltungen:
- WO-A-02/066245
- DE-A- 10 111 938
- US-A- 3 885 007

## Beschreibung

Die vorliegende Erfindung betrifft ein Verfahren zur Herstellung von expandiertem Graphit, wobei interkalatierter Graphit einer pulsierenden Verbrennung, bevorzugt in einem Pulsationsreaktor, unterzogen wird, die Verwendung des so hergestellten Graphits sowie einen gemäß dem erfindungsgemäßen Verfahren erhältlichen expandierten Graphit.

### Hintergrund der Erfindung

Graphit ist die bei Zimmertemperatur thermodynamisch stabile Modifikation des Kohlenstoffs: dunkelgrau; Dichte 2,25 g cm⁻³; Härte nach Mohs 1, Sublimation 3652 bis 3697 °C, Kp. 4827 °C. Das hexagonale Gitter des Graphit besteht aus ebenen Schichten (Graphitstruktur) die durch van-der-Waals-Kräfte gebunden sind. Obgleich reaktiver als Diamant, ist Graphit recht reaktionsträge.

Durch Einbau von Ionen oder Molekülen in die Zwischenschichträume werden Graphitverbindungen, so genannte Interkalate gebildet, in denen die Schichtstruktur des Graphits weitgehend erhalten ist, aber die Schichten aufgeweitet sind. In der Literatur wird für einige Interkalate bspw. eine Aufweitung von 3,35 auf 7,98 Å genannt. Einlagerungsverbindungen des Graphits mit Halogenen, Alkalimetallen u. ä., in denen lediglich die Schichtabstände vergrößert sind, die Graphitstruktur aber weitgehend erhalten ist, haben die Eigenschaft, bei Temperaturkontakt oberhalb 200°C zu expandieren.

Solche Interkalationsverbindungen des Graphits sind in der Literatur hinreichend beschrieben, und sie reagieren bei Erwärmung zwischen 200°C und 900°C durch Thermolyse unter Aufspaltung ihrer Schichtpakete. Die einzelnen Schichten werden dabei ziehharmonikaartig auseinander getrieben. Bei freier Expansion kann das Endvolumen bspw. bis zu 280fach des Ausgangsvolumens erhöht sein. Dem Expansionsvorgang liegt die Theorie zugrunde, dass unter dem Temperatureinfluss die eingelagerten Verbindungen abgespalten werden. Durch einen raschen und intensiven Temperatureintrag ist die Bildungsgeschwindigkeit flüchtiger eingelagerter Bestandteile wesentlich größer als die den Verlustanteil an Kohlenstoff bestimmende Diffusionsgeschwindigkeit, so dass sich ein hoher, eine große Expansion der Partikel bewirkender Binnendruck in den Interkalaten aufbaut. Die durch die Einlagerung aufgeweiteten Schichten haben die Van-der-Waals-Kräfte in den Interkalaten bereits derart geschwächt, dass die Thermolyse den fast völligen Zusammenbruch bewirkt und die Schichten auseinander getrieben werden können.

Die dabei erhaltenen Expansionsvolumina hängen von verschiedenen Faktoren ab. Beeinflussend ist dabei die z.B. die Korngröße des verwendeten Graphits, die Art der Interkalation, d.h. z.B. natürlicher Graphit oder synthetischer Graphit, sowie die Erwärmung. Die vorliegende Erfindung betrifft besonders den letzten Punkt, d.h. die Art der Erwärmung des interkalierten Graphits.

Zur Expansion von interkaliertem Graphit wurden bereits zahlreiche Verfahren vorgeschlagen.

Die EP 0087489 schlägt vor, zur Erzeugung einer hohen Strahlungsflussdichte den Graphit Infrarot-, Mikrowellen- oder Laserstrahlen auszusetzen. Durch dieses Verfahren wird zwar eine große Energiedichte eingetragen, doch ist es nicht gelungen, die bei der Expansion freiwerdenden Spaltprodukte abzuführen. Da einerseits eine schlagartige Expansion erwünscht ist, werden andererseits natürlich auch die Einlagerungsverbindungen in gleicher Geschwindigkeit freigesetzt. Diese scheiden sich bei dem Verfahren nach EP 0087489 wieder an der Oberfläche der Expandate ab, was zu unreinen Produkten führt.

In der EP 0381761 wird die Delamination von expandiertem Graphit mittels Ultraschall beschrieben. Die Delamination soll dabei in durch Ultraschall erzeugten Kavitationszonen erfolgen. Diese werden wiederum durch hochfrequente Vibrationen erzeugt. Da die Lehre hier nichts über die Expansionsmethode offenbart, aber von sehr langen, bis 30 minütigen Temperaturbehandlungen ausgeht, ist dieses Verfahren nicht geeignet, eine optimale Expansion zu erzeugen. Die nachfolgende Delaminierung mittels Ultraschall wird demnach nur dicke Schichtpakete erzielen.

Die WO02/066245 beschreibt die Herstellung flexibler Graphitschichten, wobei Graphitflocken einer bestimmten Größe mit einer Interkalationslösung behandelt werden, um Hitze expandierbare interkalierte Graphitflocken zu erhalten. Die so erhaltenen interkalierten Graphitflocken werden dann einer erhöhten Temperatur ausgesetzt, um sie in expandierte Graphitteilchen überzuführen, welche dann unter Druck zu komprimierten Schichten gerollt werden.

In dem U.S. Patent Nr. 3885007 wird ein Verfahren vorgeschlagen, welches zu einer zielgerichteten Expansion führt. Bei diesem Verfahren wird weder genügend Wärmeenergie pro Zeiteinheit eingetragen, noch können die Spaltprodukte entfernt werden.

Die JP 07041312 beschreibt ein Verfahren zur Nassexpansion. Der interkalierte Graphit wird dabei als wässrige Suspension in eine Flamme eingesprüht. Auch dieses Verfahren ergibt nur einen unzureichenden Temperaturschock, da aufgrund der endothermen Wasserverdampfung ein Temperaturgefälle an den Graphitpartikeln auftritt. Die Expansionsvolumina sind deshalb gering.

Gemahlener expandierter Graphit als Leitfähigkeitsadditiv für alkalische Batterien wird in der WO 9934673 vorgeschlagen. Dabei wird der interkalierte Graphit einer Temperaturbehandlung unterzogen, indem er direkt in eine Flamme eingespeist wird. Der Temperaturkontakt soll dabei weniger als eine Minute betragen. Bei diesem Verfahren werden zwar die Partikel vereinzelt und relativ rasch erwärmt, ein optimales Expansionsvolumen wird aber aufgrund fehlender, auf die Partikel einwirkender Zerr- und Schubkräfte nicht erreicht. Gleiches gilt für die Lehre aus U.S. Patent Nr. 6287694.

In der EP 0675556 wird ohne nähere Hinweise auf die Expansionsmethode vorgeschlagen, wegen der höheren Reinheit an Stelle von Naturgraphit synthetischen Graphit zu verwenden. Es ist jedoch bekannt, dass aufgrund der weniger perfekten Textur der Primärteilchen mit synthetischem Graphit grundsätzlich geringere Expansionsraten erzielt werden können. Hier nützt auch die anfänglich höhere Reinheit des Graphits nichts, da er durch die Interkalation und die unzureichend abgeführten Spaltprodukte wieder kontaminiert wird.

Die DE 19910707 sieht ein Verfahren vor, bei dem eine Graphitschüttung oder eine Graphitsuspension von einem ersten Bereich mit einem vorbestimmten Druck in einen zweiten Bereich gelangt, der im Vergleich zum Druck des ersten Bereichs niedriger ist. Das Verfahren sieht außerdem eine Beschleunigung der Graphitschüttung oder Graphitsuspension beim Übergang der Druckbereiche vor. Bei diesem Verfahren wird von herkömmlich, also nach dem Stand der Technik expandiertem Graphit ausgegangen, so dass eine unzureichende Expansion vorliegt. Ein weiterer Nachteil ist, dass die Druckgradienten nicht für eine Delaminierung ausreichen. Zudem werden die Fremdionen nicht beseitigt, wodurch die Anwendung dieses Graphits z. B. für Batterien nicht geeignet ist.

Angesichts der oben erwähnten Nachteile wäre ein Verfahren wünschenswert, mit dem ein expandierter Graphit mit vergrößertem Expansionsvolumen und einem verminderten Anteil an die Leitfähigkeit nachteilig beeinflussenden Verunreinigungen hergestellt werden kann oder ein solcher expandierter Graphit selbst. Weiterhin wäre ein expandierter Graphit wünschenswert, der sich leicht zu leitfähigen Produkten, d.h. Produkten hoher Reinheit, welche aus einer Vielzahl an Einzelpartikeln aufgebaut sind, weiterverarbeiten lässt.

Eine Aufgabe der vorliegenden Erfindung ist es daher, einen expandierten Graphit mit einem im Vergleich zum Stand der Technik erhöhten Expansionsvolumen und ein Verfahren zur Herstellung eines solchen expandierten Graphits bereitzustellen.

Ein weiteres Ziel ist es, einen expandierten Graphit bereitzustellen, der im Vergleich zum Stand der Technik einen geringeren Anteil an Verunreinigungen aufweist, so dass er zu einem Produkt mit verbesserten Leitfähigkeitseigenschaften weiterverarbeitet werden kann, sowie ein Verfahren zur Herstellung eines solchen expandierten Graphits.

Diese Aufgabe wird durch eine Verfahren gemäß Anspruch 1 zur Herstellung von expandiertem Graphit gelöst, bei dem man interkalierten Graphit einer pulsierenden Verbrennung, bevorzugt in einem Pulsationsreaktor, unterzieht.

Die vorliegende Erfindung betrifft weiterhin einen expandierten Graphit, erhältlich durch das erfindungsgemäße Verfahren nach Anspruch 1.

Weiterhin betrifft die vorliegenden Erfindung die Verwendung des erfindungsgemäßen expandierten Graphits oder des nach dem erfindungsgemäßen Verfahren hergestellten Graphits als leitender Bestandteil in Batterien oder Brennstoffzellen sowie die Verwendung zur Herstellung von Graphitfolien oder Graphitlaminaten, die Verwendung des expandierten Graphits in Graphitdispersionen zur Herstellung leitfähiger Beschichtungen, die Verwendung als leitender Bestandteil in Polymeren, wie Thermoplaste und Duroplaste, sowie die Verwendung als Ausgangsmaterial für nanoskalige Pulver und/oder Dispersionen.

Bevorzugte Ausführungsformen der Erfindung sind in den Unteransprüchen aufgeführt.

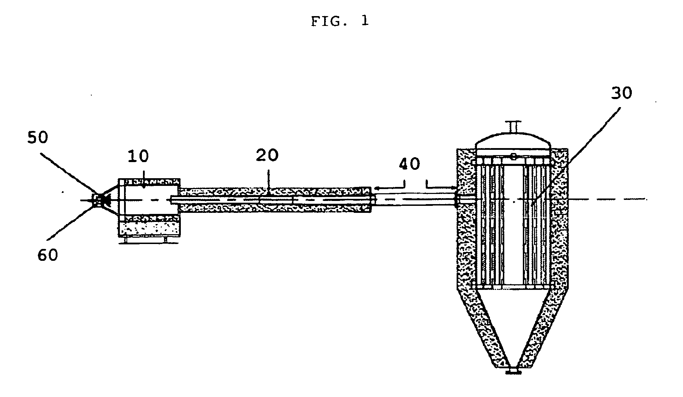

Das Wirkprinzip des Pulsationsreaktors gleicht dem eines akustischen Hohlraumresonators (Helmholtz Resonator). Für seine technische Anwendung werden eine Brennkammer und ein Resonanzrohr benötigt. Der Verbrennungsprozess in der Brennkammer setzt mit der Ausbreitung einer Druckwelle im Resonanzrohr Energie frei und regt dort eine akustische Schwingung an. Im Resonanzrohr wird der Abgasströmung dadurch eine periodische Geschwindigkeitsschwankung überlagert. Die Frequenz des Pulsationsreaktor wird durch die Gastemperatur und die Geometrie von Brennkammer und Resonanzrohr sowie durch die Geometrie der akustisch angekoppelten Räume bestimmt. Ein solcher erfindungsgemäß verwendbarer Reaktor ist beispielsweise in der DE 10111938 und DE 10109892 zur Herstellung von feindispersen Metalloxiden beschrieben. Es wird diesbezüglich insbesondere auf dort offenbarten Abbildungen des Pulsationsreaktors verwiesen. Eine schematische Darstellung eines Pulsationsreaktors findet sich in Fig. 1.

Der Pulsationsreaktor weist eine Brennkammer 10 auf, an die sich abgasseitig das Resonanzrohr 20 mit einem gegenüber der Brennkammer deutlich verringerten Strömungsquerschnitt anschließt. Der Brennkammerboden ist mit einem oder mehreren Ventilen zum Eintritt der Verbrennungsluft ausgestattet. Das können mechanische Membranklappen oder klappenlose strömungstechnische Vorrichtungen, sogenannte aerodynamische Ventile sein. Die aerodynamischen Ventile sind strömungsmechanisch und akustisch so mit der Brennkammer- und Resonanzrohrgeometrie abgestimmt, dass die in der Brennkammer erzeugten Druckwellen sich vorwiegend im Resonanzrohr ausbreiten. 40 bezeichnet die Isolierung des Resonanzrohrs 20, sowie der Brennkammer 10 und der Abtrenneinrichtung 30.

Ein in die Brennkammer eintretendes Brennstoff/Luft Gemisch 50, 60 wird gezündet und verbrennt sehr schnell, wobei auf Grund des einseitigen Abschlusses durch die aerodynamischen Ventile die Ausbreitung der Druckwelle nur in Richtung des Resonanzrohrs erfolgen kann. Der sich beschleunigende Austritt der Verbrennungsgase aus der Brennkammer erzeugt auf Grund der Trägheit der Gassäule einen Unterdruck in der Brennkammer, der durch das nachströmende Gasgemisch ausgeglichen wird. Dieses entzündet sich durch Verdichtung wiederum explosionsartig von selbst, strömt mit hoher Geschwindigkeit in das Resonanzrohr und erzeugt dort eine hohe Turbulenzanfachung der Gasströmung. Dieser Vorgang führt zur pulsierenden Verbrennung mit einer extrem großen Energiedichte.

Als Brenngas kann bspw. Erdgas und/oder Wasserstoff als Brennstoffe im Gemisch mit Luft verwendet werden.

Der interkalierte Graphit wird bei Einbringen in die Brennkammer in Form einer Dispersion bevorzugt mittels einer Düse entweder in die Brennkammer oder in das Resonanzrohr feinst verteilt eingebracht. Dadurch erfolgt eine sehr schnelle Entwässerung bzw. thermische Zersetzung des Dispersionsmediums.

Wird der interkalierte Graphit in fester Form eingebracht, kann dieser mittels eines Injektors in den Gasstrom eingebracht werden.

Für die Anwendung der vorliegenden Erfindung wird ein Pulsationsreaktor in üblicher Weise so betrieben, dass zunächst ein pulsierendes Verbrennungssystem hergestellt wird, d.h. Resonanzwellen gebildet werden. Die Zufuhr von Brennstoff und Luft wird vom Fachmann so geregelt, dass eine pulsierende Verbrennung vorliegt. Dann wird in die Brennkammer der interkalierte Graphit eingebracht und so den Bedingungen der pulsierenden Verbrennung ausgesetzt. Der Fachmann muss bei der Einbringung des interkalierten Graphits lediglich darauf achten, dass der pulsierende Verbrennungsvorgang bzw. die Druckschwankungen nicht gestört werden. Der Graphit wird kontinuierlich über eine Schleuse eingeführt. Der Graphit kann dabei als Feststoff oder in Form einer Dispersion eingebracht werden. Es sollte vermieden werden, dass "Falschluft" angesaugt wird oder Druckstöße entgegenwirken. Die eingebrachte Menge an interkaliertem Graphit kann vom Fachmann so optimiert werden, dass eine größtmögliche Vereinzelung von Teilchen erreicht wird. Die genauen Parameter der Einbringung von Brennstoff, Luft und interkaliertem Graphit können vom Fachmann an das gegebene Brennkammervolumen bzw. allgemein an die Ausmaße der Pulsationsreaktoranlage angepasst werden.

Am Ende des Resonanzrohrs ist bevorzugt eine Abtrenneinrichtung 30, bevorzugt ein Zyklonabscheider, zur Abtrennung des Expandates vorgesehen. Erfindungsgemäß können aber anstelle des Zyklons auch andere dem Fachmann bekannte Abtrenneinrichtungen zur Feststoff/Gas-Trennung verwendet werden, wie z.B. Filtereinrichtungen.

Ohne die Erfindung an eine bestimmte Theorie binden zu wollen, kann angenommen werden, dass durch die extrem kurze Thermoschockbehandlung von nur wenigen Millisekunden neben den eingelagerten Verbindungen auch die amorphen, d.h. die nicht kristallinen Bestandteile des Kohlenstoffs, oxidiert und entfernt werden. Diese Temperatureinwirkung und die durch die Expansion sich bildende große Oberfläche scheinen offenbar auszureichen, um die amorphen Bestandteile oxidativ zu verbrennen ohne jedoch die kristalline Struktur und/oder die Morphologie des Graphits zu schädigen. Diesem Umstand kommt eine erhebliche Bedeutung zu, da gerade die amorphen Bestandteile die elektrische Leitfähigkeit des Graphits negativ beeinflussen. Gerade für den Einsatz in Batteriesystemen oder Brennstoffzellen ist die Leitfähigkeit des Graphits von erheblicher Bedeutung.

Pulsierende Strömungen zeichnen sich durch einen hohen Turbulenzgrad aus. Es hat sich überraschend gezeigt, dass durch die pulsierende Verbrennung und den dadurch bedingten Verwirbelungsgrad derartig hohe Wärmeübergänge auf die Graphitpartikel wirken, dass diese schockartig aufgeheizt werden. Der Wärmeübergang auf die Graphitpartikel erfolgt schlagartig. Die gute thermische Leitfähigkeit des Graphits sorgt dabei für Aufheizzeiten im Bereich von Millisekunden. Die Graphitteilchen werden dadurch zieharmonikaartig auseinander gerissen, wobei die pulsierenden Strömungen mit hohen Turbulenzgraden zusätzlich Schichtablösungen der umströmten Graphitpartikel zur Folge haben. Anders ausgedrückt erfolgt eine Schichtablösung und somit Expansion nicht nur durch die plötzliche Temperatureinwirkung, sondern wird auch durch die im Pulstionsreaktor herrschenden Druckunterschiede begünstigt. Überraschenderweise werden die Schadstoffe wie SO₃, NO₂, die zuvor interkaliert waren, schlagartig frei und werden mit dem Abgasstrom mitgerissen und verweilen nicht auf den Partikeln und setzen sich nicht dort fest. Begünstigt wird diese Abführung der Schadstoffe durch die nahezu quantitative Vereinzelung der Partikel bei dem erfindungsgemäßen Verfahren. Dies ist ein wesentlicher Vorteil gegenüber den Verfahren gemäß Stand der Technik, in denen die Expansion nicht derart weitreichend ist oder in Schüttungen oder zumindest in Agglomeraten vorgenommen wird.

Anwendungen von Expandaten im Bereich Batterie oder Brennstoffzellen erfordern einen Graphit höchster Reinheit. Bei gleichem Ausgangsmaterial liefert das Verfahren der vorliegenden Erfindung im Vergleich zum Stand der Technik deutlich höhere Reinheitsgrade. Vergleichbar hohe Reinheitsgrade wie in der vorliegenden Erfindung können nach dem Stand der Technik nicht erreicht werden, da sich einerseits die eingelagerten Verbindungen durch nicht geöffnete Diffusionswege (keine weitreichende Vereinzelung der Partikel) nicht ganz entfernen lassen, und andererseits bereits freigesetzte Verbindungen wieder an den Teilchenoberflächen abgeschieden werden. Dies ist besonders bei Schwefelverbindungen zu beobachten. Bei dem erfindungsgemäßen Graphit ist auch der Schwefelgehalt im Vergleich zum Stand der Technik deutlich vermindert.

Der erfindungsgemäß für die Verbrennung eingesetzte interkalierte Graphit kann ein beliebiger interkalierter Graphit sein, d.h. es können Halogene, SO₃, NO₃, Alkalimetalle oder andere Verbindungen eingelagert sein. Bevorzugt wird der interkalierte Graphit durch Behandlung von Graphit mit einer starken Säure, bevorzugt konzentrierter Schwefelsäure, in Verbindung mit einem Oxidationsmittel oder durch alleinige Behandlung mit konzentrierter Salpetersäure erhalten. Dabei wird im wesentlichen SO₃ und/oder NO₃ eingelagert. Auch organische Säuren wie Ameisensäure oder Essigsäure sind erfindungsgemäß zur Interkalation geeignet. An die Säurebehandlung schließt sich üblicherweise ein Wasch- und/oder ein Trocknungsschritt an. Die Verfahren zur Herstellung von interkaliertem Graphit sind dem Fachmann grundsätzlich bekannt.

Bevorzugt wird zur Erzeugung des interkalierten Graphits ein Graphit mit einer Anfangsreinheit von 99% Kohlenstoff oder darüber, bevorzugt 99,5 % Kohlenstoff oder darüber, noch bevorzugter 99,9 % Kohlenstoff oder darüber, verwendet.

Es ist weiterhin bevorzugt, dass zur Erzeugung des interkalierten Graphits natürlicher Graphit, bevorzugt Flockengraphit, verwendet wird. Bevorzugt werden großflockige Naturgraphite eingesetzt. Es können aber auch Vein-Graphite eingesetzt werden. Synthetische Graphite zeigen ebenfalls Interkalierbarkeit und sind erfindungsgemäß ebenfalls umfasst. Es werden somit erfindungsgemäß bevorzugt die entsprechenden interkalierten Graphite verwendet.

Teilchengröße und Verteilung sind wichtige Kriterien bezüglich der Expansionsvolumina. Grundsätzlich ergeben kleinere Teilchengrößen des Ausgangsmaterials kleinere Expansionsvolumina. Ein sehr wichtiger Punkt der vorliegenden Erfindung ist jedoch, dass unabhängig von der eingesetzten Teilchengröße des interkalierten Graphits der jeweils bestmögliche Expansionsfaktor erzielt wird. D.h. bei sonst gleichen Bedingungen, ausgenommen des Expansionsverfahrens, können üblicherweise Erhöhungen des Expansionsvolumens gegenüber dem Stand der Technik von mindestens etwa 15 bis 30 % oder höher erreicht werden. Je nach Endanwendung, kann es durchaus sinnvoll sein, feinere, Graphite zu interkalieren und im Reaktor zu expandieren. Die ist vor allen dann sinnvoll, wenn das Expandat direkt, also ohne Mahlung, einem bestimmten Zweck zugeführt wird.

Die Teilchengrößen des erfindungsgemäß zur Expansion eingesetzten interkalierten Graphits liegen für die meisten Anwendungen vorzugsweise in einer Größenordnung von 3 µm bis 500 µm, bevorzugt von 100 µm bis 300 µm, sind jedoch nicht hierauf beschränkt.

Erfindungsgemäß bevorzugt wird der expandierte Graphit, d.h. der Graphit nach der pulsierenden Verbrennung zur Einstellung der Teilchengröße und/oder zur Erhöhung der Anzahl der Einzelteilchen vermahlen. Der erfindungsgemäß hergestellte expandiert Graphit lässt sich aufgrund seines hohen Expansionsvolumens und seiner Textur bzw. Kristallmorphologie, die durch in hohem Maße gerissene bzw. aufgespaltene Schichten gekennzeichnet ist, einfach durch eine Mahlbehandlung zu Einzelteilchen vermahlen. Auf diese Weise lassen sich bspw. auf einfache Weise Graphitteilchen mit ungestörter Graphitstruktur und -morphologie mit Teilchengrößen im Nanometerbereich herstellen. Ein solcher gemahlener Graphit in Einzelteilchenform weist eine hervorragende Leitfähigkeit auf. Sowohl die Zerkleinerbarkeit als auch die hohe Reinheit des erfindungsgemäßen expandierten Graphits tragen hierzu bei. Die Vermahlung kann nach herkömmlichen Verfahren erfolgen, z.B. in einer Gegenstrahlmühle oder einer Spiralstrahlmühle. Besonders geeignet sind hierfür auch Perlmühlen oder Rührwerkskugelmühlen. Es ist noch darauf hin zu weisen, dass die Vermahlung für die Endanwendung aufgrund der erhöhten Expansion und Vereinzelung mit deutlich niedrigerem energetischen und zeitlichen Aufwand als im Stand der Technik möglich ist.

Hohe spezifische Oberflächen wurden häufig als Indikator für hohe Delaminierungsgrade herangezogen. Es hat sich aber herausgestellt, dass hohe spezifische Oberflächen letztlich eine Folge der immensen zur Delaminierung erforderlichen Energien und damit der Partikelschädigung waren. Die mechanischen Einwirkungen auf die Teilchen, meist eine Kombination von Zug-, Druck-, Scher-, und Schubspannungen, bewirken Texturveränderungen in der Kristallinität, Rand- und Oberflächendeformationen sowie Mikrorisse. Die von der idealen Graphittextur abweichenden Manipulationen ergeben eine vergrößerte Oberfläche. Letztendlich spiegelt die spezifische Oberfläche den Schädigungsgrad wieder, da nachgewiesen wurde, dass hohe spezifische Oberflächen auch hohe Porositäten zur Folge hatten.

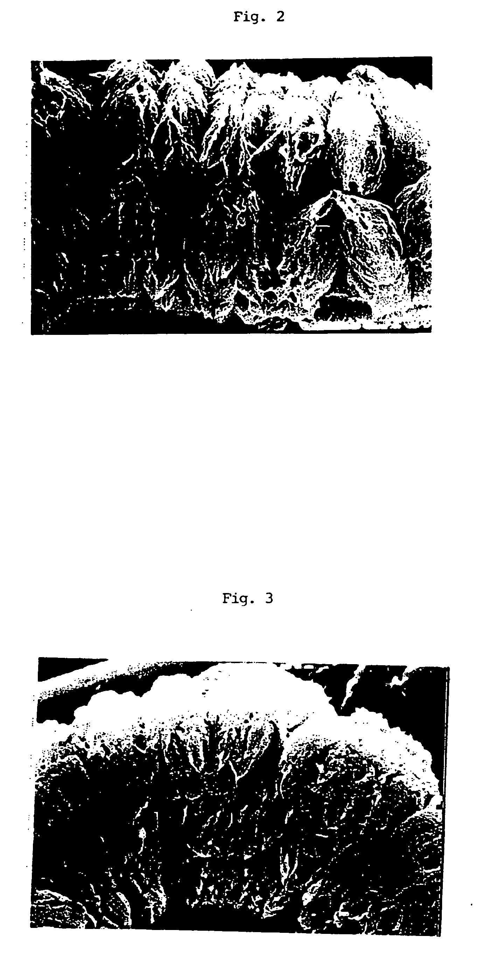

Ein Maß für die Delaminierung ist demnach nicht die spez. Oberfläche sondern das Aspektverhältnis, zumindest für blättchenförmige Stoffe mit Schichtstruktur wie Graphit, Glimmer, Kaolin etc. In der vorliegenden Erfindung ist unter Aspektverhältnis das Verhältnis der gemittelten Durchmesser zu gemittelten Höhen der Teilchen gemeint. Zur Erläuterung der Bestimmung des Aspektverhältnis gemäß der vorliegenden Erfindung ist die Fig. 3 beigefügt, die eine mikroskopische Aufnahme einer Anzahl expandierter Einzelteilchen, die gemäß der vorliegenden Erfindung hergestellt wurden, zeigt, sowie die Bestimmung des Aspektverhältnis für ein einzelnes Teilchen.

Der erfindungsgemäße expandierte Graphit weist nach Vermahlung ein deutlich höheres Aspektverhältnis auf als herkömmlich expandierter Graphit, der auf die gleiche Weise und für den gleichen Zeitraum vermahlen wurde.

Aufgrund der beschriebenen Eigenschaften des erfindungsgemäßen Graphits kann dieser, bevorzugt nach Vermahlen bzw. einer Einstellung der Teilchengröße, als leitender Bestandteil in Batterien oder Brennstoffzellen verwendet werden.

Der erfindungsgemäß hergestellte Graphit eignet sich überdies auch bevorzugt zur Herstellung von Graphitfolien oder Graphitlaminaten. Graphitfolie oder daraus hergestellte Laminate mit hoher Reinheit und Leitfähigkeit sind insbesondere für Bipolarplatten für Brennstoffzellen von Bedeutung. Die vorliegende Erfindung umfasst daher auch die Verwendung solcher Graphitfolien oder daraus hergestellter Laminate als Bestandteile von Bipolarplatten von Brennstoffzellen.

Ein weiterer Aspekt der vorliegenden Erfindung liegt in der Verwendung des expandierten Graphits in Graphitdispersionen zur Herstellung leitfähiger Beschichtungen, der Verwendung als leitender Bestandteil in Polymeren, wie Thermoplasten und Duroplasten, sowie die Verwendung als Ausgangsmaterial für nanoskalige Pulver und/oder Dispersionen, wobei diese nach Vermahlen erhältlich sind.

### Kurze Beschreibung der Abbildungen:

Fig. 1 eine schematische Darstellung eines Pulsationsreaktors.
Fig. 2 zeigt eine rasterelektronenmikroskopische Aufnahme eines erfindungsgemäß expandierten Graphits.
Fig. 3 zeigt eine rasterelektronenmikroskopische Aufnahme eines auf herkömmliche Weise expandierten Graphits, der mit dem gleichen Ausgangsmaterial und der gleichen Teilchengrößenverteilung wie in Fig. 1 erhalten wurde.

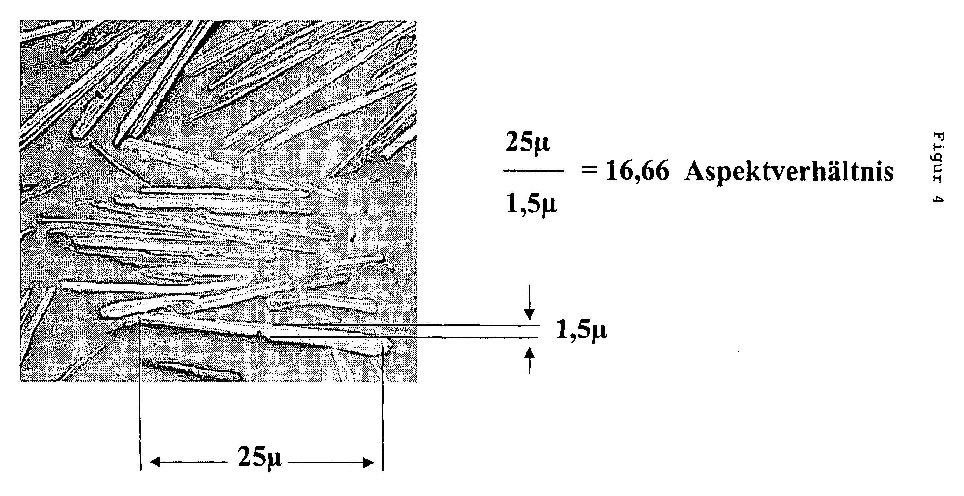

Fig. 4 zeigt erfindungsgemäß expandierte und gemahlene Graphitteilchen sowie die Bestimmung und Definition des Aspektverhältnis gemäß der vorliegenden Erfindung.
Fig. 5 zeigt die Messanordnung zur Bestimmung der Leitfähigkeit von Graphitfilmen.

Die Erfindung wird nachfolgend anhand einiger Beispiele näher erläutert.

### Beispiel 1

100 kg natürlicher Flockengraphit mit einer Reinheit von 99,5% und einer Korngröße von mind. 80% >50 mesh wird mit 110 kg 96%iger H₂SO₄ der 5 kg 30%iges H₂O₂ beigefügt wurde für 10 min behandelt. Anschließend wird die Säure ausgewaschen und der Graphit bei 120°C getrocknet. Der so erhaltene interkalierte Graphit wird nun mittels einer Luftstrahl-Feststoffpumpe in die Brennkammer eines Pulsationsreaktors bei einer Temperatur von 800°C eingespeist. Der Graphit wird dabei innerhalb von wenigen Millisekunden auf 800°C erhitzt und schlagartig expandiert. Durch die auf die Partikel einwirkenden turbulenten Strömungen im Resonanzrohr werden die zieharmonikaartig expandierten Graphitteilchen weiter aufgerissen. Dabei entsteht ein großer Teil extrem dünner, nicht mehr zusammenhängender Schichten. Das im Zyklon abgeschiedene Expandat hat folgende Spezifikationen:

| | Nach Beispiel 1 | Herkömmlich expandiert* |
|---|---|---|
| Schüttvolumen: | 270 cm³/g | 210 cm³/g |
| Schwefelgehalt: | 80 ppm | 320 ppm |
| Kohlenstoffgehalt: | 99,8 % | 99,7 % |

| | | |
|---|---|---|
| *zum Vergleich wurde ein auf gleiche Weise und aus dem gleichen Ausgangsmaterial, einschließlich gleicher Teilchengrößen, hergestellter interkalierter Graphit auf herkömmliche Art expandiert. Es herrschten, abgesehen von der Expansionsmethode, identische Versuchbedingungen vor. Bei der herkömmlichen Expansion wurde das Material in einem auf 800°C vorgeheizten Röhrenofen expandiert. In einem vertikalen 800°C heißen Röhrenofen wurde der interkalierte Graphit im freien Fall durch den Ofen befördert, so dass die Spaltprodukte gegen die Fallrichtung, also mit der Thermik, entweichen konnten. Die Verweildauer betrug ca. 3 Sekunden. | | |

Der erfindungsgemäß expandierte Graphit zeigt deutlich aufgerissene Randbereiche (Fig. 2) und eine nahezu störungsfreie Oberflächentextur. Im Gegensatz dazu zeigt der auf herkömmliche Weise expandierte Graphit eine weitaus geringere Schichtaufspaltung (Fig. 3) und damit zwangsläufig einen stärkeren Zusammenhalt, d.h. eine schlechtere Vermahlbarkeit.

Weiterhin wird klar, dass gemäß Stand der Technik Verunreinigungen weniger Möglichkeiten haben, zu entweichen.

Das nach Beispiel 1 erhaltene Expandat kann nun z.B. auf einer Gegenstrahlmühle zu beliebigen Korngrößen vermahlen werden. Aufgrund der hohen Expansionsraten und der damit leichteren Delaminierung konnte der Energieverbrauch der Mühle um ca. 10% gesenkt werden. Die Textur bzw. Kristallmorphologie des Graphits war nahezu ungestört.

### Beispiel 2

100 kg natürlicher Flockengraphit mit einer Reinheit von 99,9 %C und einer Korngröße von mind. 80% >50 mesh wird mit 100 kg rauchender HNO₃ 5 Minuten lang behandelt. Anschließend wurde die Säure ausgewaschen und der Graphit bei 120°C getrocknet. Der so erhaltene interkalierte Graphit wurde nun gemäß Beispiel 1 in einen Pulsationsreaktor eingespeist. Das erhaltene Expandat hatte folgende Spezifikationen:

| | |
|---|---|
| Schüttvolumen: | 295 cm³/g |
| Schwefelgehalt: | <5 ppm |
| Kohlenstoffgehalt: | 99,96 % |

Nach der Vermahlung mit einer Spiralstrahlmühle auf einen d 50 Wert von 20 µm wurde ein Aspektverhältnis von 16 ermittelt. "D50-Wert" bedeutet, dass 50% der Teilchen einen Durchmesser von 20µm oder kleiner aufweisen.

### Beispiel 3

100 kg natürlicher Flockengraphit aus einer Siebfraktion mit einer Teilchengröße von 500µm bis 600µm und einer Reinheit von 99,95 %C wird mit einem Gemisch aus 110 kg H₂SO₄ und 10 kg rauchender HNO₃ 8 Minuten lang behandelt. Anschließend wurde die Säure ausgewaschen und der Graphit bei 120°C getrocknet. Der so erhaltene interkalierte Graphit wurde nun gemäß Beispiel 1 in einen Pulsationsreaktor eingespeist. Das erhaltene Expandat hatte folgende Spezifikationen:

| | Nach Bsp. 3 | Herkömmlich expandiert |
|---|---|---|
| Schüttvolumen: | 420 cm³/g | 360 cm³/g |
| Schwefelgehalt: | 65 ppm | 290 ppm |
| Kohlenstoffgehalt: | 99,98 % | 99,95 % |

Das nach Beispiel 3 hergestellte Expandat wurde anschließend auf einer Spiralstrahlmühle mit Heißluftbetrieb (160°C) und angeschlossenem Sichter zu folgender Korngrößenverteilung gemahlen. Zum Vergleich sind die Ergebnisse aus einem Mahlversuch mit herkömmlich expandierten Graphit (gleiches Ausgangsmaterial, gleiche Teilchengröße und Teilchengrößenverteilung) und das erzielte Aspektverhältnis angegeben.

| | Nach Bsp. 3 | Herkömmlich expandiert |
|---|---|---|
| D10 | 2,7µm | 2,9µm |
| D50 | 6,7µm | 6,4µm |
| D90 | 15,4µm | 16,1µm |
| Aspektverhältnis | 25 | 16 |

Das höhere Aspektverhältnis belegt deutlich die bessere Delamination des Graphits, hervorgerufen durch die erfindungsgemäße Methode.

In einem weiteren Versuch wurde die Leitfähigkeit des erfindungsgemäß expandierten und des herkömmlich expandierten Graphits untersucht.

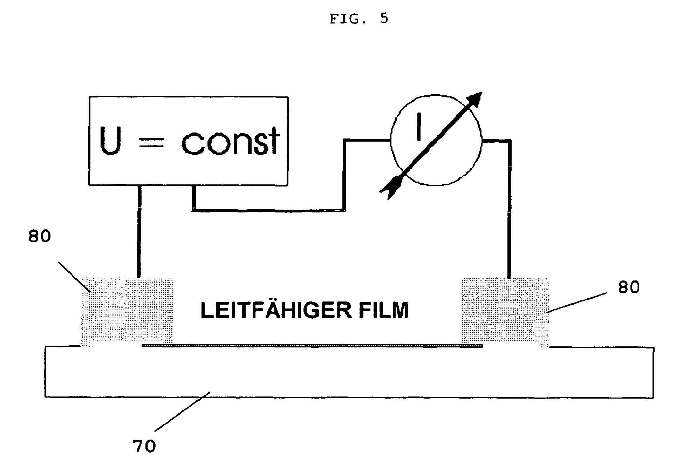

Die Bestimmung der Leitfähigkeit wurde wie folgt durchgeführt: Auf ein Substrat 70 wurden der erfindungsgemäß expandierte Graphit und der herkömmlich expandierter Graphit als Dispersion aufgebracht und zu einem Film verstrichen. Nach Trocknen wurde ein durchgehender leitfähiger Film von 200µm Schichtdicke erhalten. Anschließend erfolgte die Messung der Leitfähigkeit des Films wie in Fig. 5 dargestellt.

Es ergaben sich folgende Werte:

| Nach Bsp. 3 | Herkömmlich expandiert |
|---|---|
| 0,10 kΩ | 0,33 kΩ |

## Patentansprüche

1. Verfahren zur Herstellung von expandiertem Graphit,
**dadurch gekennzeichnet,**
**dass** man interkalierten Graphit einer pulsierenden Verbrennung unterzieht.

2. Verfahren nach Anspruch 1,
**dadurch gekennzeichnet,**
**dass** die pulsierende Verbrennung in einem Pulsationsreaktor durchgeführt wird.

3. Verfahren nach Anspruch 1 oder 2,
**dadurch gekennzeichnet,**
**dass** der für die pulsierende Verbrennung eingesetzte interkalierte Graphit durch Behandlung von Graphit mit einer starken Säure, bevorzugt konzentrierter Schwefelsäure, in Verbindung mit einem Oxidationsmittel oder durch Behandlung mit konzentrierter Salpetersäure erhalten wird.

4. Verfahren nach Anspruch 1, 2 oder 3,
**dadurch gekennzeichnet,**
**dass** zur Erzeugung des interkalierten Graphits ein Graphit mit einer Anfangsreinheit von 99% Kohlenstoff oder darüber, bevorzugt 99,5 % Kohlenstoff oder darüber, noch bevorzugter 99,9 % Kohlenstoff oder darüber, verwendet wird.

5. Verfahren nach einem oder mehreren der Ansprüche 1 bis 4,
**dadurch gekennzeichnet,**
**dass** zur Erzeugung des interkalierten Graphits natürlicher Graphit, bevorzugt Flockengraphit, verwendet wird.

6. Verfahren nach einem oder mehreren der Ansprüche 1 bis 5,
**dadurch gekennzeichnet,**
**dass** der interkalierte Graphit zur Erzeugung des expandierten Graphits eine Teilchengröße von 3µm bis 500µm, bevorzugt von 100µm bis 300µm, aufweist

7. Verfahren nach einem oder mehreren der Ansprüche 1 bis 6,
**dadurch gekennzeichnet,**
**dass** nach dem pulsierenden Verbrennen des Graphits in dem Pulsationsreaktor eine Abtrennung des expandierten Graphits erfolgt, bevorzugt unter Verwendung eines Zyklons.

8. Verfahren nach einem oder mehreren der Ansprüche 1 bis 7,
**dadurch gekennzeichnet,**
**dass** der expandierte Graphit zur Einstellung der Teilchengröße und/oder zur Erhöhung der Anzahl der Einzelteilchen vermahlen wird.

9. Expandierter Graphit, erhältlich durch ein Verfahren gemäß einem oder mehreren der Ansprüche 1 bis 8.

10. Verwendung eines expandierten Graphits nach Anspruch 9 oder eines nach einem der Ansprüche 1 bis 8 hergestellten Graphits als leitender Bestandteil in Batterien oder Brennstoffzellen.

11. Verwendung des expandierten Graphits nach Anspruch 9 oder des nach einem der Ansprüche 1 bis 8 hergestellten Graphits zur Herstellung von Graphitfolien oder Graphitlaminaten, in Graphitdispersionen für leitende Beschichtungen, als leitender Bestandteil in Polymeren wie Thermoplasten oder Duroplasten, als Ausgangsmaterial für nanoskalige Pulver und/oder Dispersionen.

12. Verwendung des expandierten Graphits nach Anspruch 9 oder des nach einem der Ansprüche 1 bis 8 hergestellten Graphits zur Herstellung von Graphitfolien oder Graphitlaminaten für Bipolarplatten für Brennstoffzellen.

13. Graphitfolie oder Graphitlaminat, umfassend den expandierten Graphit nach Anspruch 9 oder den Graphit, erhältlich nach einem der Ansprüche 1 bis 8.

## Claims

1. A process for the production of expanded graphite,
**characterised in that**
intercalated graphite is subjected to pulsed combustion.

2. The process according to claim 1,
**characterised in that**
the pulsed combustion is carried out in a pulsed reactor.

3. The process according to claim 1 or 2,
**characterised in that**
the intercalated graphite used for the pulsed combustion is obtained by the treatment of graphite with a strong acid, preferably concentrated sulfuric acid, in conjunction with an oxidising agent or by treatment with concentrated nitric acid.

4. The process according to claim 1, 2 or 3,
**characterised in that**,
to produce the intercalated graphite, a graphite with an initial purity of 99% carbon or more, preferably 99.5% carbon or more, more preferably 99.9% carbon or more, is used.

5. The process according to one or more of claims 1 to 4,
**characterised in that**
to produce the intercalated graphite, natural graphite, preferably flake graphite, is used.

6. The process according to one or more of claims 1 to 5,
**characterised in that**
the intercalated graphite for the production of the expanded graphite has a particle size of 3 µm to 500 µm, preferably of 100 µm to 300 µm.

7. The process according to one or more of claims 1 to 6,
**characterised in that**
after the pulsed combustion of the graphite in the pulsed reactor, a separation of the expanded graphite takes place, preferably using a cyclone.

8. The process according to one or more of claims 1 to 7,
**characterised in that**
the expanded graphite is ground to adjust the particle size and/or to increase the number of individual particles.

9. Expanded graphite obtainable by a process according to one or more of claims 1 to 8.

10. The use of an expanded graphite according to claim 9 or of a graphite produced according to one of claims 1 to 8 as a conductive component in batteries or fuel cells.

11. The use of the expanded graphite according to claim 9 or of the graphite produced according to one of claims 1 to 8 for the production of graphite films or graphite laminates, in graphite dispersions for conductive coatings, as a conductive component in polymers such as thermoplastics or thermosets, as a starting material for nanoscale powders and/or dispersions.

12. The use of the expanded graphite according to claim 9 or of the graphite produced according to one of claims 1 to 8 for the production of graphite films or graphite laminates for bipolar plates for fuel cells.

13. A graphite film or graphite laminate comprising the expanded graphite according to claim 9 or the graphite obtainable according to one of claims 1 to 8.

## Revendications

1. Procédé de fabrication de graphite expansé, **caractérisé en ce que** l'on soumet le graphite intercalaté à une combustion pulsée.

2. Procédé selon la revendication 1, **caractérisé en ce que** la combustion pulsée est réalisée dans un réacteur à pulsations.

3. Procédé selon la revendication 1 ou 2, **caractérisé en ce que** le graphite intercalaté utilisé pour la combustion pulsée est obtenu par traitement du graphite avec un acide fort, de préférence, l'acide sulfurique concentré, associé à un agent oxydant ou par traitement avec de l'acide nitrique concentré.

4. Procédé selon la revendication 1, 2 ou 3, **caractérisé en ce que**, pour produire le graphite intercalaté, on utilise un graphite présentant une pureté initiale de 99 % de carbone ou supérieure, de préférence 99,5 % de carbone ou supérieure, de manière encore davantage préférée, de 99,9 % de carbone ou supérieure.

5. Procédé selon l'une quelconque oui plusieurs des revendications 1 à 4, **caractérisé en ce que** pour produire le graphite intercalaté, on utilise du graphite naturel, de préférence, du graphite floconneux.

6. Procédé selon l'une quelconque ou plusieurs des revendications 1 à 5, **caractérisé en ce que** le graphite intercalaté pour la production du graphite expansé présente une taille de particules de 3 µm à 500 µm, de préférence de 100 µm à 300 µm.

7. Procédé selon l'une quelconque ou plusieurs des revendications 1 à 6, **caractérisé en ce que**, après la combustion pulsée du graphite dans la réaction à pulsations, s'effectue une séparation du graphite expansé, de préférence en utilisant un séparateur centrifuge.

8. Procédé selon l'une quelconque ou plusieurs des revendications 1 à 7, **caractérisé en ce que** le graphite expansé peut être broyé pour ajuster la taille des particules et/ou augmenter le nombre des particules individuelles.

9. Graphite expansé disponible par un procédé selon l'une quelconque ou plusieurs des revendications 1 à 8.

10. Utilisation d'un graphite expansé selon la revendication 9, ou d'un graphite prépare selon l'une quelconque des revendications 1 à 8 comme composant conducteur dans des piles ou des piles à combustible.

11. Utilisation du graphite expansé selon la revendication 9 ou du graphite préparé selon l'une quelconque des revendications 1 à 8 pour la fabrication de feuilles de graphite ou de stratifiés de graphite, dans des dispersions de graphite pour des revêtements conducteurs, comme composants conducteurs dans des polymères tels que des matières thermoplastiques ou thermodurcissables, comme matériau de départ pour des poudres à l'échelle du nanomètre et/ou des dispersions.

12. Utilisation du graphite expansé selon la revendication 9 ou du graphite préparé selon l'une quelconque des revendications 1 à 8, pour la fabrication de feuilles de graphite ou de stratifiés de graphite pour des plaques bipolaires pour des piles à combustible.

13. Feuille de graphite ou stratifié de graphite comprenant le graphite expansé selon la revendication 9 ou le graphite obtenu selon l'une quelconque des revendications 1 à 8.
